(19)

Europäisches Patentamt

European Patent Office

Office européen des brevets

(11) **EP 4 525 068 A1**

(12) **EUROPEAN PATENT APPLICATION**
published in accordance with Art. 153(4) EPC

(43) Date of publication:
**19.03.2025 Bulletin 2025/12**

(21) Application number: **23850407.0**

(22) Date of filing: **01.08.2023**

(51) International Patent Classification (IPC):
$H01M\ 4/13$ (2010.01)      $H01M\ 4/04$ (2006.01)
$H01M\ 4/139$ (2010.01)     $H01M\ 4/62$ (2006.01)
$H01M\ 4/66$ (2006.01)      $H01M\ 10/0525$ (2010.01)
$H01M\ 4/02$ (2006.01)

(52) Cooperative Patent Classification (CPC):
H01M 4/02; H01M 4/04; H01M 4/13; H01M 4/139;
H01M 4/36; H01M 4/38; H01M 4/48; H01M 4/587;
H01M 4/62; H01M 4/66; H01M 10/0525;
Y02E 60/10

(86) International application number:
**PCT/KR2023/011268**

(87) International publication number:
**WO 2024/029906 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.08.2022  KR 20220095678**
          **23.08.2022  KR 20220105751**

(71) Applicant: **LG Energy Solution, Ltd.
Seoul 07335 (KR)**

(72) Inventors:
• **KANG, Hyeon-Jeong
  Daejeon 34122 (KR)**
• **PARK, Young-Sun
  Daejeon 34122 (KR)**
• **KIM, Yong-Jun
  Daejeon 34122 (KR)**
• **PARK, Moon-Soo
  Daejeon 34122 (KR)**

(74) Representative: **Plasseraud IP
104 Rue de Richelieu
CS92104
75080 Paris Cedex 02 (FR)**

(54) **ELECTRODE AND ELECTROCHEMICAL DEVICE COMPRISING SAME**

(57)    The present disclosure relates to an electrode for an electrochemical device. The electrode has a lower layer zone and an upper layer zone, wherein different types of granules are contained in the lower layer zone and the upper layer zone. In addition, the electrode includes an intermediate layer zone disposed between the lower layer zone and the upper layer zone and having an interface formed by quadrangular shaped concave portions and convex portions. In this manner, the electrode shows an increased ion diffusion rate and electrode capacity.

FIG. 1

EP 4 525 068 A1

# EP 4 525 068 A1

## Description

<u>TECHNICAL FIELD</u>

The present disclosure relates to an electrode and an electrochemical device including the same.

The present application claims priority to Korean Patent Application No. 10-2022-0095678 filed on August 1, 2022 and Korean Patent Application No. 10-2022-0105751 filed on August 23, 2022 in the Republic of Korea, the disclosures of which are incorporated herein by reference.

<u>BACKGROUND ART</u>

Due to a rapid increase in use of fossil fuel, there has been an increasing need for use of substitute energy and clean energy. The most actively studied field as a part of attempts to meet such a need is the field of power generation and power storage using electrochemistry. Typical examples of electrochemical devices using such electrochemical energy include secondary batteries, the application spectrum of which tends to be extended more and more. A lithium secondary battery as a representative of such secondary batteries has been used not only as an energy source of mobile instruments but also as a power source of electric vehicles and hybrid electric vehicles capable of substituting for vehicles, such as gasoline vehicles and diesel vehicles, using fossil fuel and regarded as one of the main causes of air pollution, recently. In addition, application of such a lithium secondary battery has been extended even to a supplementary power source of electric power through the formation into a grid.

Recently, various studies have been conducted with reference to development of batteries using a plurality of electrode active materials in order to improve the performance of a battery. However, when a plurality of electrode active materials is blended to form a single electrode active material layer, there was a problem of degradation of the performance of a battery due to the interference effect of different types of active materials. Therefore, there has been considered a method for forming a multilayer-type electrode active material layer in which each layer has its specialized function in manufacturing a battery to improve the characteristics of an electrode and the performance of a battery.

Herein, in general, there is a difference in ion diffusion rate and electrode capacity per unit weight or volume depending on the type of an electrode active material. Accordingly, there was an attempt to manufacture a multilayer electrode having a layer including an electrode active material showing a high ion diffusion rate and low electrode capacity and a layer including an electrode active material showing a low ion diffusion rate and high electrode capacity. However, in this case, it is not possible to realize an electrode showing an improved ion diffusion rate and electrode capacity at the same time.

<u>DISCLOSURE</u>

<u>Technical Problem</u>

The present disclosure is designed to solve the problems of the related art, and therefore the present disclosure is directed to providing a multilayer electrode realizing both a high ion diffusion rate and a large electrode capacity, and a method for manufacturing the same.

The present disclosure is also directed to providing an electrode showing the above-mentioned characteristics by a method to which a dry process is introduced, and a method for manufacturing the electrode.

<u>Technical Solution</u>

In one aspect of the present disclosure, there is provided an electrode according to any one of the following embodiments.

According to the first embodiment of the present disclosure, there is provided an electrode including: a current collector; and an electrode active material layer disposed on at least one surface of the current collector,

wherein the electrode active material layer includes: a lower layer zone adjacent to the current collector and including a plurality of first granules; an upper layer zone disposed on the lower layer zone and including a plurality of second granules; and an intermediate layer zone which is disposed between the lower layer zone and the upper layer zone and in which a first unit zone including the first granules and a second unit zone including the second granules are disposed alternately n times along the longitudinal direction of the electrode active material layer, wherein n is an integer of 2 or more,

each of the first unit zone and the second unit zone has a quadrangular shaped cross-section, the first granules include a first electrode active material and a first binder for binding the first electrode active material, and the second granules include a second electrode active material and a second binder for binding the second electrode active material.

According to the second embodiment of the present disclosure, there is provided the electrode as defined in the first embodiment, wherein the first granules and the second granules may satisfy at least one of the following characteristics:

1) a first characteristic that the particle size of the first granules and that of the second granules are different from each other; and
2) a second characteristic that the composition of the first granules and that of the second granules are different from each other.

According to the third embodiment of the present disclosure, there is provided the electrode as defined in the first or the second embodiment, wherein the cross-sectional shape of each of the first unit zone and the second unit zone of the intermediate layer zone may satisfy the following conditions of T1, T2, W1 and W2:

$$d1 \leq T1,$$

$$d2 \leq T2,$$

$$50\ d1 \leq W1 \leq 1{,}000\ d1,$$

$$50\ d2 \leq W2 \leq 1{,}000\ d2,$$

T1 is the thickness of the first unit zone, T2 is the thickness of the second unit zone, W1 is the width of the first unit zone, W2 is the width of the second unit zone, d1 is the average particle diameter ($D_{50}$) of the first granules, and d2 is the average particle diameter ($D_{50}$) of the second granules.

According to the fourth embodiment of the present disclosure, there is provided the electrode as defined in any one of the first to the third embodiments, wherein the cross-sectional shape of each of the first unit zone and the second unit zone of the intermediate layer zone may satisfy the following conditions of T1, T2, W1 and W2:

$$d1 \leq T1 \leq 2\ d1,$$

$$d2 \leq T2 \leq 2\ d1,$$

$$100\ d1 \leq W1 \leq 600\ d1,$$

$$100\ d2 \leq W2 \leq 600\ d2.$$

According to the fifth embodiment of the present disclosure, there is provided the electrode as defined in any one of the first to the fourth embodiments, wherein when the average particle diameter ($D_{50}$) of the first granules is d1 and the average particle diameter ($D_{50}$) of the second granules is d2, $d2 \geq d1$.

According to the sixth embodiment of the present disclosure, there is provided the electrode as defined in any one of the first to the fifth embodiments, wherein when the average particle diameter ($D_{50}$) of the first granules is d1 and the average particle diameter ($D_{50}$) of the second granules is d2, $15\ \mu m \leq d1 \leq 150\ \mu m$, and $15\ \mu m \leq d2 \leq 150\ \mu m$.

According to the seventh embodiment of the present disclosure, there is provided the electrode as defined in any one of the first to the sixth embodiments, wherein the electrode active material may include a negative electrode active material.

According to the eighth embodiment of the present disclosure, there is provided the electrode as defined in any one of the first to the seventh embodiments, wherein the electrode active material may include a positive electrode active material.

According to the ninth embodiment of the present disclosure, there is provided the electrode as defined in any one of the first to the eighth embodiments, wherein at least one of the first electrode active material and the second electrode active material may include a carbonaceous compound, and at least one of the first electrode active material and the second electrode active material may include a silicon-based oxide.

According to the tenth embodiment of the present disclosure, there is provided the electrode as defined in any one of the first to the ninth embodiments, wherein the second electrode active material may include $SiO_x$ ($0 \leq x \leq 2$).

According to the eleventh embodiment of the present disclosure, there is provided the electrode as defined in any one of the first to the tenth embodiments, wherein the content of the first granules may be 95 wt% or more based on the total weight of the granules contained in the lower layer zone, and the content of the second granules may be 95 wt% or more based on the total weight of the granules contained in the upper layer zone.

According to the twelfth embodiment of the present disclosure, there is provided the electrode as defined in any one of the first to the eleventh embodiments, wherein n may be an integer of 15-25.

According to the thirteenth embodiment of the present disclosure, there is provided the electrode as defined in any one of the first to the twelfth embodiments, wherein the intermediate layer zone may show an ion diffusion rate higher than the ion diffusion rate of the upper layer zone.

According to the fourteenth embodiment of the present disclosure, there is provided the electrode as defined in any one of the first to the thirteenth embodiments, wherein the upper layer zone may have an electrode capacity per volume higher than the electrode capacity per volume of the lower layer zone.

In another aspect of the present disclosure, there is provided a method for manufacturing an electrode according to any one of the following embodiments.

According to the fifteenth embodiment of the present disclosure, there is provided a method for manufacturing an electrode including a process of forming an electrode active material layer on at least one surface of a current collector, wherein the process of forming an electrode active material layer includes the steps of:

applying a plurality of first granules onto at least one surface of the current collector; a first pressurization step of pressurizing the surface of the applied first granules by using a pressurizing roll having a pattern to form a pattern on the surface of the first granules; applying a plurality of second granules onto the surface of the pressurized first granules; and a second pressurization step of pressurizing the surface of the applied second granules,

the first granules include a first electrode active material and a first binder for binding the first electrode active material, and the second granules include a second electrode active material and a second binder for binding the second electrode active material.

According to the sixteenth embodiment of the present disclosure, there is provided the method for manufacturing an electrode as defined in the fifteenth embodiment, wherein the first granules and the second granules may satisfy at least one of the following characteristics:

1) a first characteristic that the particle size of the first granules and that of the second granules are different from each other; and

2) a second characteristic that the composition of the first granules and that of the second granules are different from each other.

According to the seventeenth embodiment of the present disclosure, there is provided the method for manufacturing an electrode as defined in the fifteenth or the sixteenth embodiment, wherein the pressurization roll may have a protrusion-type pattern or a mesh-type pattern.

According to the eighteenth embodiment of the present disclosure, there is provided the method for manufacturing an electrode as defined in any one of the fifteenth to the seventeenth embodiments, wherein the pattern of the pressurizing roll may include a plurality of quadrangular protrusions, and the shape of the protrusion may satisfy the following conditions of W3, W4 and T3:

$$d2 \leq T3,$$

$$50 \, d2 \leq W3 \leq 1{,}000 \, d2,$$

$$50 \, d1 \leq W4 \leq 1{,}000 \, d1,$$

W3 is the width of the protruding portion of the protrusion, W4 is the shortest linear distance between two protrusions, T3 is the thickness of the protruding portion of the protrusion, d1 is the average particle diameter ($D_{50}$) of the first granules, and d2 is the average particle diameter ($D_{50}$) of the second granules.

According to the nineteenth embodiment of the present disclosure, there is provided the method for manufacturing an electrode as defined in any one of the fifteenth to the eighteenth embodiments, wherein the electrode active material layer includes: a lower layer zone adjacent to the current collector and including the plurality of first granules; an upper layer zone disposed on the lower layer zone and including the plurality of second granules; and an intermediate layer zone which is disposed between the lower layer zone and the upper layer zone and in which a first unit zone including the first granules and a second unit zone including the second granules are disposed alternately n times along the longitudinal direction of the electrode active material layer, and each of the first unit zone and the second unit zone has a quadrangular shaped cross-section.

In still another aspect of the present disclosure, there is provided an electrochemical device according to the following embodiment.

According to the twentieth embodiment of the present disclosure, there is provided an electrochemical device including a positive electrode, a negative electrode, a separator interposed between the positive electrode and the negative electrode, and an electrolyte, wherein at least one of the positive electrode and the negative electrode is the electrode as defined in any one of the first to the fourteenth embodiments.

Advantageous Effects

The electrode according to an embodiment of the present disclosure shows an improved ion diffusion rate and/or electrode capacity.

For example, the electrode according to an embodiment of the present disclosure shows an improved ion diffusion rate, or shows an improved electrode capacity while realizing a similar level of ion diffusion rate, as compared to not only an electrode having a single layer but also a multilayer electrode including an intermediate layer zone having a flat linear shaped interface.

Particularly, the electrode according to an embodiment of the present disclosure shows an improved electrode capacity, while maintaining a similar level of resistance as compared to a multilayer electrode including an intermediate layer zone having a flat linear shaped interface.

The method for manufacturing an electrode according to another embodiment of the present disclosure provides an electrode having the above-described characteristics.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a schematic sectional view illustrating the electrode active material layer in the electrode according to an embodiment of the present disclosure.
FIG. 2 is a schematic sectional view illustrating the electrode active material layer in the electrode according to an embodiment of the present disclosure.
FIG. 3 is a schematic sectional view illustrating the electrode active material layer in the electrode according to still an embodiment of the present disclosure.
FIG. 4 is a schematic sectional view illustrating the electrode active material layer in the electrode according to an embodiment of the present disclosure.
FIG. 5 is a schematic sectional view illustrating the electrode active material layer in the electrode according to an embodiment of the present disclosure.
FIG. 6 is a flow chart illustrating the method for manufacturing an electrode according to an embodiment of the present disclosure.
FIG. 7 is a photographic image illustrating the pattern of a pressurizing roll used in the method for manufacturing an electrode according to an embodiment of the present disclosure.
FIG. 8 is a photographic image illustrating a pressurizing roll having a pattern, used in manufacturing an electrode according to an embodiment of the present disclosure.
FIG. 9 is a schematic view illustrating an electrode assembly using the electrode according to an embodiment of the present disclosure.
FIG. 10 is a schematic view illustrating an electrode assembly using the electrode according to Example 1 described hereinafter.
FIG. 11 is a schematic view illustrating an electrode assembly using the electrode according to Example 2 described hereinafter.
FIG. 12 is a schematic view illustrating an electrode assembly using the electrode according to Example 3 described hereinafter.

BEST MODE

Hereinafter, preferred embodiments of the present disclosure will be described in detail. However, the description proposed herein is just a preferable example for the purpose of illustrations only, not intended to limit the scope of the disclosure, and each constitutional element may be modified diversely or may be combined optionally. Therefore, it should be understood that other equivalents and modifications could be made thereto without departing from the scope of the disclosure.

Throughout the specification, the expression 'a part includes an element' does not preclude the presence of any additional elements but means that the part may further include the other elements.

As used herein, the expression 'A and/or B' means 'A, B or both of them'.

The present disclosure relates to an electrode and an electrochemical device including the same. According to the present disclosure, the electrochemical device includes any device which carries out electrochemical reaction, and particular examples thereof include all types of primary batteries, secondary batteries, fuel cells, solar cells or capacitors, such as super capacitor devices. Preferably, the electrochemical device may be a secondary battery, more preferably, a lithium-ion secondary battery.

In one aspect of the present disclosure, there is provided an electrode including an active material layer having a multilayer structure.

Particularly, the electrode includes: a current collector; and an electrode active material layer disposed on at least one surface of the current collector.

Herein, the vertical direction from the current collector in the electrode to the surface of the electrode active material layer is referred to as 'thickness direction' of the electrode active material layer, and the direction orthogonal to the thickness direction is referred to as 'longitudinal direction' of the electrode active material layer.

According to an embodiment of the present disclosure, the electrode active material layer includes: a lower layer zone adjacent to the current collector and including a plurality of first granules; an upper layer zone disposed on the lower layer zone and including a plurality of second granules; and an intermediate layer zone which is disposed between the lower layer zone and the upper layer zone and in which a first unit zone including the first granules and a second unit zone including the second granules are disposed alternately n times along the longitudinal direction of the electrode active material layer. Herein, each of the first unit zone and the second unit zone has a quadrangular shaped cross-section.

In addition, the first granules include a first electrode active material and a first binder for binding the first electrode active material, and the second granules include a second electrode active material and a second binder for binding the second electrode active material.

According to an embodiment of the present disclosure, the size of the first granules and that of the second granules are different from each other.

In the electrode according to an embodiment of the present disclosure, the intermediate layer zone includes an interface having a repetitive quadrangular shape formed by alternating the first unit zone and the second unit zone.

According to an embodiment of the present disclosure, the first unit zone and the second unit zone may be formed of granules having a different size, and an effect of increasing the ion diffusion rate may be realized at the interface. Particularly, according to an embodiment of the present disclosure, since the interface has an increased surface area as compared to a multilayer electrode including a lower layer and an upper layer zone formed of granules having a different size with an interface having a linear shape, it is possible to realize an advantageous effect in terms of an increase in ion diffusion rate.

Particularly, according to an embodiment of the present disclosure, when granules having an advantageous kinetic of ion diffusion as compared to the lower layer zone are disposed in the upper layer zone, and an interface having a quadrangular shaped cross-section formed by alternating the first unit zone and the second unit zone is formed in the intermediate layer zone, transport of lithium (ion) is facilitated in the thickness direction of the electrode, thereby realizing an effect of improving the charge capacity of the electrode.

For this purpose, according to an embodiment of the present disclosure, the first granules disposed in the lower layer zone and the second granules disposed in the upper layer zone may satisfy at least one of the following characteristics:

1) a first characteristic that the particle size of the first granules and that of the second granules are different from each other; and
2) a second characteristic that the composition of the first granules and that of the second granules are different from each other.

According to an embodiment of the present disclosure, the first characteristic is configured to make the granules have a different size regardless of the composition of granules so that the granules may have different capacity values and/or ion diffusion rates.

With reference to the first characteristic, according to an embodiment of the present disclosure, the first granules and the second granules may have the same composition or a different composition.

The expression 'granules have the same composition' means that the types of active material, binder, conductive material (if it is further used), or the like, contained in the granules and the weight ratios thereof are the same. Contrary to this, the expression 'granules have a different composition' means that at least one of the types of active material, binder, conductive material (if it is further used), or the like, contained in the granules is different, or the weight ratios thereof are different even if the above ingredients are the same types.

According to an embodiment of the present disclosure, the second characteristic is configured to make the granules have a different composition regardless of the size of granules so that the granules may have different capacity values and/or ion diffusion rates.

With reference to the second characteristic, according to an embodiment of the present disclosure, the first granules and the second granules may be provided with the same size or a similar size, wherein 'similar size' may refer to a difference in particle diameter of $\pm 10\%$ or less, preferably $\pm 5\%$ or less.

According to an embodiment of the present disclosure, each of the first unit zone and the second unit zone may have a quadrangular shaped cross-section, such as square-shaped section or rectangular shaped section. Particularly, each of the first unit zone and the second unit zone may have a rectangular shaped section in which the width W1, W2 in the longitudinal direction is larger than the height T1, T2 in the thickness direction, but the scope of the present disclosure is not limited thereto.

Further, according to an embodiment of the present disclosure, each of the first unit zone and the second unit zone may have a quadrangular shaped cross-section, and thus provides the interface 310 of the intermediate layer zone with an increased surface area as compared to the electrodes having the other shapes (e.g. triangular shape, trapezoidal shape, etc.), thereby realizing an advantageous effect in terms of improvement of the ion diffusion rate. In addition, it is possible to realize an advantageous effect in terms of improvement of the adhesive property between the lower layer zone and the upper layer zone by increasing the surface area of the interface 310 of the intermediate layer zone, but the effects of the present disclosure are not limited thereto.

According to an embodiment of the present disclosure, 'n' representing the number of alternation of the first unit zone and the second unit zone disposed in the intermediate layer zone is an integer of 2 or more. For example, n may be an integer of 2 or more, an integer of 3 or more, an integer of 4 or more, an integer of 5 or more, or an integer of 10 or more, and particularly, n may be an integer of 50 or less within the above-defined range, but is not limited thereto. For example, n may be an integer of 10-50, 15-40, 15-25, or 15-20.

According to an embodiment of the present disclosure, the electrode may have a variable size as necessary, and for example, may have a length of 5-1,000 mm. For example, the electrode may have a length of 10-700 mm, 50-600 mm, 100-600 mm, or 500-550 mm. According to an embodiment of the present disclosure, based on the length of the electrode ranging from 500 mm to 520 mm, such as 509.5 mm, n representing the number of alternation of the first unit zone and the second unit zone may be an integer of 10-50, such as an integer of 15-35, 20-30 or 20-25, preferably.

**In** addition, according to an embodiment of the present disclosure, the electrode may have a variable size as necessary, and for example, may have a width of 5-1,000 mm. For example, the electrode may have a width of 5-500 mm, 10-200 mm, 50-150 mm, 80-100 mm, or 90-100 mm, but is not limited thereto.

According to an embodiment of the present disclosure, the electrode may have a rectangular shape with a length of 509.3 mm and a width of 93.3 mm.

Herein, the length of the electrode may refer to the size in the direction along which the first unit zone and the second unit zone alternating in the electrode active material layer expand, and for example, may refer to the longer side when the electrode has a rectangular shape. The width of the electrode may refer to the direction orthogonal to the longitudinal direction of the electrode, and for example, may refer to the shorter side when the electrode has a rectangular shape.

The electrode active material layer may include an electrode active material and a binder, as electrode materials. Particularly, the electrode materials may be contained in the electrode active material layer in the form of granules. The granules refer to composite particles including the electrode active material and the electrode binder. According to an embodiment of the present disclosure, the granules may include the electrode active material particles bound by the electrode binder.

Meanwhile, the electrode active material layer may further include free electrode active material particles derived from the granules, or the like.

According to an embodiment of the present disclosure, the granules may be prepared by mixing the electrode active material with the electrode binder and carrying out granulation through spray drying, but the method for preparing the granules is not limited thereto.

According to an embodiment of the present disclosure, the electrode active material layer may be formed by applying the granules to one surface of a current collector and carrying out pressurization without using any separate solvent, but the purpose of use and application of the granules are not limited thereto.

Detailed description of the structure and composition of the granules will be described hereinafter, and the structure of the electrode active material layer will be explained first.

According to the present disclosure, the electrode active material layer includes a plurality of granules integrated in a layered structure, has a plurality of fine pores provided by the interstitial volumes which are spaces among the granules, and shows porous property derived from such a structure. Herein, the ion diffusion rate of the electrode active material layer may be determined by some factors, such as the size and number of the fine pores, and the electrode capacity may be determined by the packing density of the granules.

According to an embodiment of the present disclosure, the electrode active material layer includes a lower layer zone, intermediate layer zone and an upper layer zone in the order adjacent to the current collector.

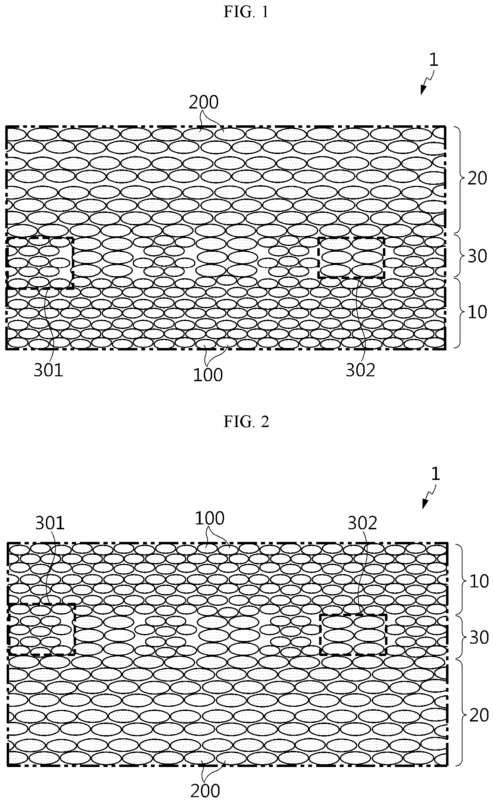

FIG. 1 is a schematic sectional view illustrating the electrode active material layer 1 in the electrode according to an embodiment of the present disclosure.

Referring to FIG. 1, the electrode active material layer 1 includes a lower layer zone 10 adjacent to a current collector (not shown) and including a plurality of first granules 100, an upper layer zone 20 disposed on the lower layer zone and including a plurality of second granules 200, and an intermediate layer zone 30 disposed between the lower layer zone and the upper layer zone.

In the intermediate layer zone 30, a first unit zone 301 including the first granules 100 and a second unit zone 302 including the second granules 200 are disposed alternately n times along the longitudinal direction of the electrode active material layer 1. Herein, each of the first unit zone and the second unit zone has a quadrangular shaped cross-section, and thus a continuous quadrangular shaped interface is formed in the intermediate layer zone 30 through the repetition of the first unit zone 301 and the second unit zone 302.

According to the present disclosure, the first granules and the second granules have a different particle size, and FIG. 1 shows an embodiment in which the second granules 200 have a larger particle size than the particle size of the first granules 100.

FIG. 2 is a schematic sectional view illustrating the electrode active material layer 1 according to an embodiment of the present disclosure. FIG. 2 shows an embodiment in which the first granules 100 have a larger particle size than the particle size of the second granules 200.

According to an embodiment of the present disclosure, the first granules and the second granules are different from each other in terms of particle size, and thus the electrode according to an embodiment of the present disclosure shows an electrode capacity different from the electrode capacity of an electrode using the first granules or the second granules alone. In addition, since the granules contained in the upper layer zone and the granules contained in the lower layer zone have a different particle size, the upper layer zone and the lower layer zone are formed to have a different porosity. Therefore, the electrode according to an embodiment of the present disclosure shows an ion diffusion rate different from the ion diffusion rate of an electrode using the first granules or the second granules alone.

According to the related art, there has been an attempt to realize a multilayer negative electrode using active material particles having a different size. However, the electrode according to the related art is characterized in that a flat interface, i.e. a linear shaped interface, is formed between the layers formed by using the active material particles having a different size. Herein, the porosity in each layer is uniform, and there may be a phenomenon in which no significant change in porosity occurs between the lower layer zone and the upper layer zone based on the interface. Otherwise, when the active material particles forming the lower layer zone is smaller to realize a higher packing density, there may be a phenomenon in which the lower layer zone based on the interface rather shows a decrease in porosity. In this case, when an electrolyte (liquid electrolyte) is introduced from the upper layer zone adjacent to the surface of the electrode active material layer to the lower layer zone adjacent to the current collector, the electrolyte wetting rate, i.e. the diffusion rate of lithium ions contained in the electrolyte, is lowered in the vicinity of the interface, resulting in the problem of an increase in electrolyte wetting (lithium ion diffusion) time.

Therefore, according to an embodiment of the present disclosure, there is provided a multilayer electrode including a lower layer zone and an upper layer zone using granules having a different particle size and/or a different composition, wherein the granules having a different particle size and/or different composition are incorporated between the lower layer zone and the upper layer zone to form a continuous quadrangular shaped interface in which a quadrangular shaped convex portion and concave portion alternate based on the lower layer zone, thereby providing an increased interfacial surface area, improving the porosity in the middle of the active material layer and enhancing the ion diffusion rate, but the mechanism of the present disclosure is not limited thereto.

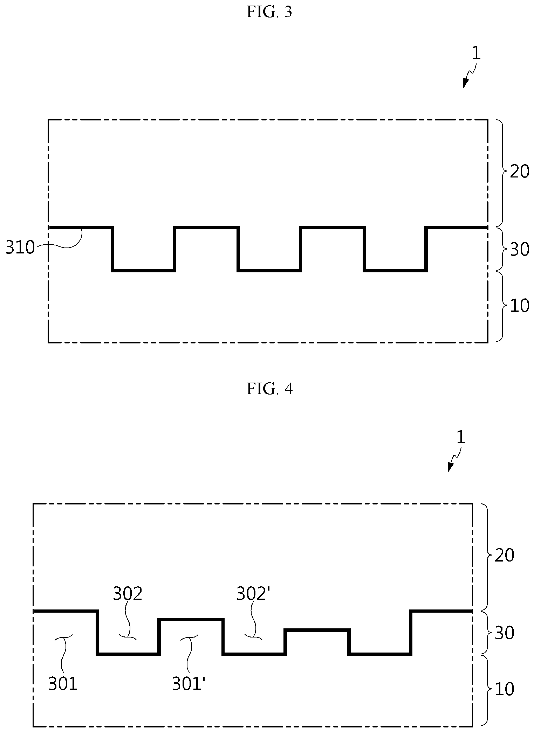

FIG. 3 is a schematic sectional view illustrating the electrode active material layer 1 in the electrode according to an embodiment of the present disclosure. Referring to FIG. 3, it can be seen that there is a quadrangular shaped interface 310 formed by alternating a quadrangular first unit zone and a quadrangular second unit zone in the intermediate layer zone 30 of the electrode active material layer. The interface formed in the intermediate layer zone is an interface generated from a difference in the size and/or composition between the first granules of the first unit zone and the second granules of the second unit zone, as described above. For example, the interface 310 may be determined by observing the electrode with the naked eyes or through scanning electron microscopy (SEM).

According to an embodiment of the present disclosure, the interface may be determined through SEM observation.

According to an embodiment of the present disclosure, when the first unit zone and the second unit zone are disposed alternately n times, the first unit zones may have the same or a different size of the vertical cross-sectional shape, and the second unit zones may have the same or a different size of the vertical cross-sectional shape.

According to an embodiment of the present disclosure, in the case of an electrode in which the first unit zone and the second unit zone alternate n times and n is an even number, the electrode may include the first unit zone in the number of n/2 and the second unit zone in the number of n/2.

According to another embodiment of the present disclosure, in the case of an electrode in which the first unit zone and the second unit zone alternate n times and n is an odd number, the electrode may include the first unit zone in the number of (n-1)/2 and the second unit zone in the number of (n+1)/2, or may include the first unit zone in the number of (n+1)/2 and the second unit zone in the number of (n-1)/2.

FIG. 4 is a sectional schematic view illustrating the electrode active material layer 1 in the electrode according to an embodiment of the present disclosure. Referring to FIG. 4, in the intermediate layer zone 30, a plurality of first unit zones 301, 301' and a plurality of second unit zones 302, 302' are disposed alternately, wherein each of the first unit zones 301, 301' has a quadrangular shaped cross-section but the cross-sectional shape may be different from each other, and each of the second unit zones 302, 302' has a quadrangular shaped cross-section but the cross-sectional shape may be different from each other.

According to another embodiment of the present disclosure, the first unit zones disposed in the intermediate layer zone 30 may have the same size of vertical cross-sectional shape, and the second unit zones may have the same size of vertical cross-sectional shape.

According to still another embodiment of the present disclosure, the first unit zones disposed in the intermediate layer zone 30 may have the same size of vertical cross-sectional shape and the second unit zones may have a different size of vertical cross-sectional shape, or the first unit zones disposed in the intermediate layer zone 30 may have a different size of vertical cross-sectional shape and the second unit zones may have the same size of vertical cross-sectional shape.

According to an embodiment of the present disclosure, the cross-sectional shape of each of the first unit zone and the second unit zone of the intermediate layer zone may satisfy the following conditions:

$$d1 \leq T1,$$

$$d2 \leq T2,$$

$$50\ d1 \leq W1 \leq 1{,}000\ d1,$$

$$50\ d2 \leq W2 \leq 1{,}000\ d2,$$

wherein T1 is the thickness of the first unit zone, T2 is the thickness of the second unit zone, W1 is the width of the first unit zone, W2 is the width of the second unit zone, d1 is the average particle diameter ($D_{50}$) of the first granules, and d2 is the average particle diameter ($D_{50}$) of the second granules.

According to another embodiment of the present disclosure, the cross-sectional shape of each of the first unit zone and the second unit zone of the intermediate layer zone may satisfy the following conditions:

$$d1 \leq T1 \leq 2\ d1,$$

$$d2 \leq T2 \leq 2\ d1,$$

$$100\ d1 \leq W1 \leq 600\ d1,$$

$$100\ d2 \leq W2 \leq 600\ d2.$$

According to an embodiment of the present disclosure, when W1, W2, T1 and T2 satisfy the above-defined conditions, it is possible to realize an advantageous effect in terms of the ion diffusion rate and/or electrode capacity of the electrode, but the scope of the present disclosure is not limited thereto.

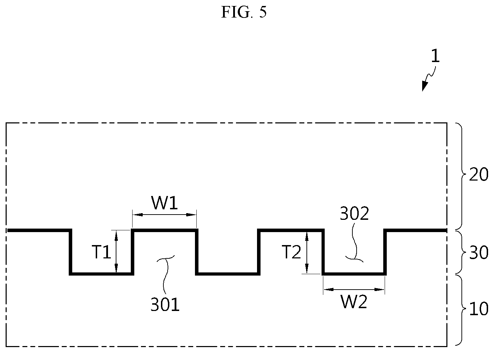

FIG. 5 illustrates the width W1 and thickness T1 of the first unit zone 301, and the width W2 and thickness T2 of the second unit zone 302.

According to an embodiment of the present disclosure, when the average particle diameter ($D_{50}$) of the first granules is d1 and the average particle diameter ($D_{50}$) of the second granules is d2, d2 $\geq$ d1. Particularly, d1 may be 15-150 $\mu$m, and d2 may be 15-150 $\mu$m. When the size of the first granules and the size of the second granules satisfy the above-defined condition, it is possible to realize an advantageous effect in terms of the classification of the first granules and the second granules and the easiness of the manufacture of electrodes and to provide an advantageous effect in terms of the ion diffusion rate, but the scope of the present disclosure is not limited thereto.

According to another embodiment of the present disclosure, d1 $\geq$ d2, d1 may be 15-150 $\mu$m, and d2 may be 15-150 $\mu$m.

According to an embodiment of the present disclosure, 15 $\mu$m $\leq$ d1 $\leq$ 60 $\mu$m, 15 $\mu$m $\leq$ d2 $\leq$ 60 $\mu$m, and d1 $\geq$ d2. In addition, 30 $\mu$m $\leq$ d1 $\leq$ 60 $\mu$m, 30 $\mu$m $\leq$ d2 $\leq$ 60 $\mu$m, and d1 $\geq$ d2. Further, 45 $\mu$m $\leq$ d1 $\leq$ 55 $\mu$m, 45 $\mu$m $\leq$ d2 $\leq$ 55 $\mu$m, and d1 $\geq$ d2. According to another embodiment of the present disclosure, d1 > d2.

According to an embodiment of the present disclosure, each of d1 and d2 may have a particle diameter corresponding to 2-5 times, and for example, 3-4 times, of the particle diameter of the electrode active material contained in the first granules and the second granules, respectively.

Herein, 'average particle diameter ($D_{50}$)' of the granules means the particle diameter at the point of 50% in the particle number accumulated distribution as a function of particle diameter. The particle diameter may be determined by using the laser diffraction method. Particularly, a powder to be analyzed is dispersed in a dispersion medium and introduced to a commercially available laser diffraction particle size analyzer (e.g. Microtrac S3500) to measure a difference in diffraction pattern depending on particle size, when the particles pass through laser beams, and then particle size distribution can be calculated. Then, $D_{50}$ may be determined by calculating the particle diameter at the point of 50% in the particle number accumulated distribution depending on particle diameter in the analyzer system.

According to an embodiment of the present disclosure, each of T1 and T2 may be 1-1,000 $\mu$m. Preferably, T1 may be equal to or larger than the average particle diameter ($D_{50}$) of the first granules and may be equal to or smaller than the height of the electrode, and T2 may be equal to or larger than the average particle diameter ($D_{50}$) of the second granules and may be equal to or smaller than the height of the electrode.

According to an embodiment of the present disclosure, each of T1 and T2 may be 1-500 $\mu$m, 20-100 $\mu$m, particularly 25-75 $\mu$m, 25-70 $\mu$m, 25-65 $\mu$m, 25-60 $\mu$m, 30-60 $\mu$m, 40-60 $\mu$m, 50-60 $\mu$m, or 50-55 $\mu$m, but is not limited thereto.

According to an embodiment of the present disclosure, the second granules for forming the upper layer zone may be contained in the lower layer zone in a certain amount, but it is preferred in terms of the ion diffusion rate of the electrode that the content of the first granules may be 95 wt% or more, 96 wt% or more, 97 wt% or more, 98 wt% or more, 99 wt% or more, 99.5 wt% or more, or 100 wt% (i.e. only the first granules are present), based on the total weight of the granules contained in the lower layer zone.

According to another embodiment of the present disclosure, the first granules for forming the lower layer zone may be contained in the upper layer zone in a certain amount, but it is preferred in terms of the ion diffusion rate of the electrode that the content of the second granules may be 95 wt% or more, 96 wt% or more, 97 wt% or more, 98 wt% or more, 99 wt% or more, 99.5 wt% or more, or 100 wt% (i.e. only the second granules are present), based on the total weight of the granules contained in the upper layer zone.

According to still another embodiment of the present disclosure, the content of the first granules may be 95 wt% or more based on the total weight of the granules contained in the lower layer zone, and the content of the second granules may be 95 wt% or more based on the total weight of the granules contained in the upper layer zone.

According to yet another embodiment of the present disclosure, the content of the first granules may be 100 wt% based on the total weight of the granules contained in the lower layer zone, and the content of the second granules may be 100 wt% based on the total weight of the granules contained in the upper layer zone.

According to an embodiment of the present disclosure, as the number, n, of repetition of the first unit zone and the second unit zone is increased, the surface area of the interface formed in the intermediate layer zone is increased. Therefore, it is possible to enhance the increment of the ion diffusion rate by the interface.

According to an embodiment of the present disclosure, when the second granules contained in the upper layer zone have a size larger than the size of the first granules contained in the lower layer zone, the upper layer zone may show a higher porosity due to an increase in interstitial volumes as compared to the lower layer zone. As a result, the upper layer zone may show a higher ion diffusion rate as compared to the lower layer zone. When the upper layer zone has a higher ion diffusion rate as compared to the lower layer zone, it is possible to realize an effect of inhibiting lithium binding on the surface of the electrode and facilitating the diffusion of ions, thereby improving the charging performance of a battery, but the scope of the present disclosure is not limited thereto.

The ion diffusion rate means a degree of diffusion of ions in a specific material. Particularly, unless otherwise stated herein, the ion diffusion rate means a lithium-ion diffusion rate.

There is no particular limitation in the method for determining the ion diffusion rate. For example, the ion diffusion rate may be determined by using the method of Galvanostatic Intermittent Titration Technique (GITT) in a charged/-discharged state. According to an embodiment of the present disclosure, the ion diffusion rate may be determined by the method of GITT under the condition of SOC 50% and may be expressed in the unit of $cm^2/s$, but is not limited thereto.

According to another embodiment of the present disclosure, the intermediate layer zone may show a higher ion diffusion rate as compared to the upper layer zone. This may result from a decrease in the packing density of the granules in the intermediate layer zone as compared to the upper layer zone and an increase in the porosity of the intermediate layer zone as compared to the upper layer zone, but the mechanism of the present disclosure is not limited thereto.

Herein, 'porosity' refers to a ratio of the volume occupied by pores based on the total volume in a given structure. The porosity may be expressed in the unit of vol%, and may be used interchangeably with such terms as pore ratio, porous degree, or the like. For example, the porosity of the electrode may be determined by the Brunauer-Emmett-Teller (BET) measurement method using nitrogen gas or Hg porosimetry and according to ASTM D-2873. Further, the net density of an electrode may be calculated from the density (apparent density) of the electrode and the compositional ratio of ingredients contained in the electrode and density of each ingredient, and the porosity of the electrode may be calculated from the difference between the apparent density and the net density. For example, the porosity may be calculated according to the following Formula 1:

$$[\text{Formula 1}]$$

$$\text{Porosity (vol\%)} = \{1\text{-(Apparent density/Net density)}\} \times 100$$

In Formula 1, the apparent density may be calculated according to the following Formula 2.

$$\text{Apparent density (g/cm}^3) = \text{(Weight (g) of porous substrate)} / \{\text{(Thickness (cm) of porous substrate)} \times \text{(Area (cm}^2) \text{ of porous substrate)}\} \qquad [\text{Formula 2}]$$

According to an embodiment of the present disclosure, the intermediate layer zone may have a porosity of 10-50 vol%, or 20-40 vol%, but is not limited thereto.

According to an embodiment of the present disclosure, the intermediate layer zone may have a higher porosity as compared to the upper layer zone and the lower layer zone, and for example, the intermediate layer zone may have a porosity corresponding to a value increased by 10-200%, such as 30-100%, as compared to the porosity of each of the upper layer zone and the lower layer zone, but the scope of the present disclosure is not limited thereto.

According to an embodiment of the present disclosure, when the second granules contained in the upper layer zone have a lower ion diffusion rate as compared to the first granules contained in the lower layer zone, it is possible to provide the upper layer zone with a lower ion diffusion rate as compared to the lower layer zone. Such a lower ion diffusion rate in the upper layer zone increases the lithium binding in the upper layer zone, and thus can realize an effect of providing the upper layer zone of the electrode with improved energy density. In this manner, it is possible to realize an effect of providing the upper layer zone with an improved electrode capacity as compared to the lower layer zone.

According to another embodiment of the present disclosure, the electrode capacity per volume of the upper layer zone may be higher than the electrode capacity per volume of the lower layer zone.

According to an embodiment of the present disclosure, when the first granules contained in the lower layer zone have a lower ion diffusion rate as compared to the second granules contained in the upper layer zone, it is possible to provide the lower layer zone with a lower ion diffusion rate as compared to the upper layer zone. Such a lower ion diffusion rate in the lower layer zone increases the lithium binding in the lower layer zone, and thus can realize an effect of providing the lower layer zone of the electrode with improved energy density. In this manner, it is possible to realize an effect of providing the lower layer zone with an improved electrode capacity as compared to the upper layer zone.

According to another embodiment of the present disclosure, the electrode capacity per volume of the lower layer zone may be higher than the electrode capacity per volume of the upper layer zone.

The electrode capacity per volume refers to the electrode capacity measured based on the same volume of the electrode, and may be determined by measuring the discharge capacity in a charged/discharged condition, but is not limited thereto. For example, the electrode capacity per volume may be determined as discharge capacity when each of electrode samples prepared with the same volume is charged at 25°C under a constant current (CC) condition at 0.1 C to 3.0 V (vs Li/Li$^+$) and discharged at a current density of 0.1 C to 1.7 V (vs Li/Li$^+$).

According to an embodiment of the present disclosure, the intermediate layer zone is disposed between two electrode active material layers having a difference in electrode capacity per volume as mentioned above to increase the effective area of the interface between the upper layer zone and the lower layer zone. In this manner, it is possible to realize an advantageous effect in terms of efficient improvement of the electrode capacity based on the total volume of the electrode.

According to an embodiment of the present disclosure, the electrode active material layer may have a total thickness of 50-120 $\mu$m, particularly 70-112 $\mu$m. Herein, based on the total thickness of the electrode active material layer, the intermediate layer zone may have a thickness of 15-40 $\mu$m, particularly 20-40 $\mu$m, or 27-37 $\mu$m. In addition, for example, each of the upper layer zone and the lower layer zone may have a thickness of 15-40 $\mu$m, particularly 20-40 $\mu$m, or 27-37 $\mu$m.

Herein, the total 'thickness' of the electrode active material layer, 'thickness' of each layer contained therein, or the thickness of W1, W2, T1 or T2 may refer to a value determined by a known method. The thickness may be a value measured by using a thickness gauge (VL-50S-B, available from Mitutoyo), but is not limited thereto.

Next, the structure and composition of the granules contained in the electrode active material layer will be explained in detail.

Herein, the granules contained in the lower layer zone of the electrode active material layer is referred to as the first granules, and the granules contained in the upper layer zone is referred to as the second granules, wherein the first granules and the second granules have a different particle size. In the intermediate layer zone, both the first granules and the second granules are contained through the first unit zone including the first granules and the second unit zone including the second granules, respectively.

The granule includes an electrode active material and a binder, and may further include a conductive material, if necessary. Herein, the electrode active material, binder and conductive material contained in the first granule is referred to as the first electrode active material, the first binder and the first conductive material, and the electrode active material, binder and conductive material contained in the second granule is referred to as the second electrode active material, the second binder and the second conductive material.

The granules have a form of a group of particles through the binding of the electrode active material and/or the conductive material with the binder, and the electrode active material layer includes a plurality of granules.

According to an embodiment of the present disclosure, when the granule includes an active material, a binder and a conductive material, the content (wt%) of the binder based on the total weight (100 wt%) of the conductive material may be higher at the surface portion of the granule as compared to the core portion thereof.

Herein, the surface portion refers to the zone near the surface of the granule from the surface of the granule to a predetermined depth toward the core of the granule, and the core portion refers to the part other than the surface portion. According to an embodiment of the present disclosure, the surface portion may refer to the zone between the surface of the granule and 70% or more (preferably 85% or more, 90% or more, or 95% or more) of the radius from the center of the particle diameter of the granule.

According to an embodiment of the present disclosure, in the zone between the surface of the granule and 90% or more of the radius from the center of the particle diameter of the granule, the content of the binder based on the total weight (100 wt%) of the granules may be 50 wt% or more, 60 wt% or more, 70 wt% or more, 80 wt% or more, or 90 wt% or more.

According to another embodiment of the present disclosure, in the zone between the surface of the granule and 95% or more of the radius from the center of the particle diameter of the granule, the content of the binder based on the total weight (100 wt%) of the granules may be 50 wt% or more, 60 wt% or more, 70 wt% or more, 80 wt% or more, or 90 wt% or more.

The granule will be explained in more detail. The granule may include a core portion containing a plurality of electrode active materials; and a surface portion disposed totally or partially outside of the core portion and containing an electrode binder by which the electrode active material particles are bound to one another. In other words, in the core portion of the granule, a plurality of electrode active materials form an aggregate while they are in contact with one another through surface contact, linear contact, dot-like contact, or two or more contact modes of them. In addition, in the surface portion of the granule, the electrode binder can fix and bind the electrode active materials of the core portion of the granule to one another, while being disposed partially or totally outside of the aggregate.

According to an embodiment of the present disclosure, a small amount of binder may also be contained in the core portion to function to interconnect and fix the electrode active materials in the core portion. However, in the core portion of the granule, the electrode active materials form an aggregate while they are in contact with one another through surface contact, linear contact, dot-like contact, or two or more contact modes of them, and in the surface portion of the granule, the electrode binder can fix and bind the electrode active materials of the core portion of the granule to one another, while being disposed partially or totally outside of the aggregate.

According to an embodiment of the present disclosure, the granule may have an aspect ratio of 0.5-1.5. As the aspect ratio approaches 1, the granules become spherical. Particularly, the granule may have an aspect ratio of 0.8-1.2, and more particularly 0.95-1.05. The aspect ratio refers to the ratio of the longer axis length based on the shorter axis length of the granule. Herein, the shorter axis length refers to the average value of lengths of 10 granules in the direction of the axis having the shortest length in the granule, and the longer axis length refers to the average value of lengths of 10 granules in the direction of the axis having the longest length in the granule. When the aspect ratio of the granule satisfies the above-defined range, there is an advantage in that the granule has sufficient flowability suitable for the process.

Meanwhile, when the granule further includes a conductive material, the conductive material may be fixed in the granules through the binding between the conductive material and the electrode active material particles or the binding of the conductive material particles among themselves by the binder.

According to an embodiment of the present disclosure, the electrode may be a negative electrode, and the electrode active material may be a negative electrode active material.

According to an embodiment of the present disclosure, when the electrode is a negative electrode, the first negative electrode material and the second negative electrode active material may be the same or different, and particular examples thereof may include, but are not limited to: carbon, such as non-graphitizable carbon or graphite-based carbon; metal composite oxides, such as $Li_xFe_2O_3$ ($0 \leq x \leq 1$), $Li_xWO_2$ ($0 \leq x \leq 1$) and $Sn_xMe_{1-x}Me'_yO_z$ (Me: Mn, Fe, Pb, Ge; Me': Al, B, P, Si, elements of Group 1, 2 or 3 in the Periodic Table, halogen; $0 < x \leq 1$; $1 \leq y \leq 3$; $1 \leq z \leq 8$); lithium metal; lithium alloy; silicon-based alloy; tin-based alloy; silicon oxides, such as SiO, SiO/C and $SiO_2$; metal oxides, such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$; conductive polymers, such as polyacetylene; Li-Co-Ni type materials; or a mixture of two or more of them.

According to an embodiment of the present disclosure, each of the first negative electrode active material and the second negative electrode active material may include a carbonaceous compound.

According to an embodiment of the present disclosure, at least one of the first negative electrode active material and the second negative electrode active material includes a carbonaceous compound, and at least one of the first negative electrode active material and the second negative electrode active material includes a silicon-based compound.

According to another embodiment of the present disclosure, the first negative electrode active material may include a carbonaceous compound alone, and the second negative electrode active material may include a mixture of a carbonaceous compound with a silicon-based oxide ($SiO_x$ ($0 \leq x \leq 2$)).

According to still another embodiment of the present disclosure, the first negative electrode active material may include a mixture of a carbonaceous compound with a silicon-based oxide, and the second negative electrode active material may include a carbonaceous compound alone.

According to an embodiment of the present disclosure, when at least one of the first negative electrode active material and the second negative electrode active material includes a mixture of a carbonaceous compound with a silicon-based oxide, the mixing ratio of the carbonaceous compound:silicon-based oxide may be 9:1-1:9, 9:1-5:5, 9:1-6:4, 9:1-7:3, or 9:1-8:2 in terms of the weight ratio of the carbonaceous compound to the silicon-based oxide, but the scope of the present disclosure is not limited thereto.

According to an embodiment of the present disclosure, the first negative electrode active material may include artificial graphite alone, and the second negative electrode active material may include a mixture of SiO with artificial graphite. Particularly, the first negative electrode active material includes artificial graphite alone, and the second negative electrode active material may include a mixture of artificial graphite with SiO, for example, a mixture containing artificial graphite and SiO at a weight ratio of 9:1-5:5, or 9:1.

According to an embodiment of the present disclosure, the electrode may be a positive electrode, and the electrode active material may be a positive electrode active material.

According to an embodiment of the present disclosure, when the electrode is a positive electrode, the first positive electrode active material and the second positive electrode active material may be the same or different, and particular examples thereof may include, but are not limited to: lithium transition metal oxides; lithium metal iron phosphates, lithium nickel-manganese-cobalt oxides; lithium nickel-manganese-cobalt oxides partially substituted with other transition metals; or two or more of them. Particularly, the positive electrode active material may include, but are not limited to: layered compounds, such as lithium cobalt oxide ($LiCoO_2$) and lithium nickel oxide($LiNiO_2$), or those compounds substituted with one or more transition metals; lithium manganese oxides, such as $Li_{1+x}Mn_{2-x}O_4$ (wherein x is 0-0.33), $LiMnO_3$, $LiMn_2O_3$ and $LiMnO_2$; lithium coper oxide ($Li_2CuO_2$); vanadium oxides, such as $LiV_3O_8$, $LiV_3O_4$, $V_2O_5$ or $Cu_2V_2O_7$; Ni site-type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1) or $Li_2Mn_3MO_8$ (wherein M is Fe, Co, Ni, Cu or Zn); lithium metal phosphates $LiMPO_4$ (wherein M is Fe, CO, Ni or Mn); lithium nickel-manganese-cobalt oxides $Li_{1+x}(Ni_aCo_bMn_c)_{1-x}O_2$ (x is 0-0.03, a is 0.3-0.95, b is 0.01-0.35, c is 0.01-0.5, a + b + c = 1); lithium nickel-manganese-cobalt oxides partially substituted with aluminum (lithium-nickel-manganese-cobalt-aluminum oxide) $Li_a[Ni_bCo_cMn_dAl_e]_{1-f}M1_fO_2$ (wherein M1 is at least one selected from the group consisting of Zr, B, W, Mg, Ce, Hf, Ta, La, Ti, Sr, Ba, F, P and S, $0.8 \leq a \leq 1.2$, $0.5 \leq b \leq 0.99$, $0 < c < 0.5$, $0 < d < 0.5$, $0.01 \leq e \leq 0.1$, and $0 \leq f \leq 0.1$); lithium nickel-manganese-cobalt oxides partially substituted with other transition metals $Li_{1+x}(Ni_aCo_bMn_cM_a)_{1-x}O_2$ (wherein x is 0-0.33, a is 0.3-0.95, b is 0.01-0.35, c is 0.01-0.5, d is 0.001-0.03, a + b + c + d = 1, and M is any one selected from the group consisting of Fe, V, Cr, Ti, W, Ta, Mg and Mo); disulfide compounds; $Fe_2(MoO_4)_3$; or a mixture of two or more of them.

According to an embodiment of the present disclosure, the first binder and the second binder may be the same or different, and is not particularly limited, as long as it has adhesiveness, is stable against electrochemical reactions, can retain the shape of granules through the binding of the electrode materials, such as the electrode active material and the conductive material, and allows the granules to be integrated in a layered structure through the binding among themselves upon the compression and to maintain a stable shape. Particular examples of each of the first binder and the second binder may include, but are not limited to: styrene butadiene rubber (SBR), butadiene rubber (BR), nitrile butadiene rubber (NBR), styrene butadiene styrene block copolymer (SBS), styrene ethylene butadiene block copolymer (SEB), styrene-(styrene butadiene)-styrene block copolymer, natural rubber (NR), isoprene rubber (IR), ethylene-propylene-diene terpolymer (EPDM), poly(ethylene-co-propylene-co-5-methylene-2-norbornene), polytetrafluoroethylene (PTFE), polyvinylidene fluoride, polyvinyl chloride, polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyvinyl pyrrolidone, polyvinyl acetate, polyethylene, polypropylene, polyethylene-co-vinyl acetate, polyethylene oxide, polypropylene oxide, polyarylate, cyanoethyl pullulan, cyanoethyl polyvinyl alcohol, or two or more of them. More particularly, the binder may include, but are not limited to: styrene butadiene rubber (SBR), nitrile butadiene rubber (NBR), polymethyl methacrylate, polyethylhexyl acrylate, polybutyl acrylate, or two or more of them.

According to an embodiment of the present disclosure, the first conductive material and the second conductive material may be the same or different, and is not particularly limited, as long as it causes no chemical change in the corresponding battery. Particular examples of each of the first conductive material and the second conductive material may include, but are not limited to: graphite, such as natural graphite or artificial graphite; carbon black-based carbonaceous compound, such as carbon black, acetylene black, ketjen black, channel black, furnace black, lamp black or thermal black; conductive fibers, such as carbon fibers or metal fibers; fluorocarbon; metal powder, such as aluminum or nickel powder; conductive whisker, such as zinc oxide or potassium titanate; conductive metal oxide, such as titanium dioxide; conductive polymer such as a polyphenylene derivative; or the like. According to a particular embodiment of the present disclosure, each of the first conductive material and the second conductive material may be any one selected from the above-listed materials, or a mixture of two or more of them, but the scope of the present disclosure is not limited thereto.

According to an embodiment of the present disclosure, the granule may be prepared by mixing an electrode active material and a binder with a solvent to prepare a slurry in a fluidized phase; and spray drying the slurry. As describe above, the granule may further include a conductive material, if necessary. In addition, the granule may further include other additives for improving the performance.

First, the electrode active material and the binder, and optionally, a conductive material and an additive are dispersed or dissolved in a dispersion medium (solvent for the electrode binder) to obtain a slurry including the electrode active material and the binder dispersed or dissolved therein.

The dispersion medium used to obtain the slurry may be water, most suitably, but an organic solvent may also be used. Particular examples of the organic solvent include: an alkyl alcohol, such as methyl alcohol, ethyl alcohol or propyl alcohol; alkyl ketone, such as acetone or methyl ethyl ketone; ether, such as tetrahydrofuran, dioxane or diglyme; amide, such as diethylformamide, dimethylacetoamide, N-methyl-2-pyrrolidone (also referred to as NMP hereinafter) or dimethyl imidazolidinone; sulfur-based solvent, such as dimethyl sulfoxide or sulfurane; or the like. However, the organic solvent is an alcohol, preferably. When an organic solvent having a lower boiling point as compared to water is used in combination, it is possible to increase the drying rate during fluidization granulation. In addition, since the dispersibility or solubility of the electrode binder may be changed, the viscosity or flowability of the slurry may be controlled depending on the amount or type of the dispersion medium to improve the production efficiency.

The amount of the dispersion medium used when preparing the slurry may be generally such an amount that the solid content of the slurry may be 1-50 wt%, 5-50 wt% or 10-30 wt%.

The method or order of dispersing or dissolving the electrode active material, the binder, or the like, is not particularly limited. For example, such methods may include a method of adding the electrode active material and the binder to the dispersion medium and mixing them, a method of dissolving or dispersing the binder in the dispersion medium, adding the electrode active material finally and mixing them, or the like. When the slurry includes a conductive material and/or an additive, such ingredients may be introduced during the introduction of the electrode active material. Particular examples of the mixing means may include a mixing system, such as a ball mill, sand mill, bead mill, pigment dispersion system, stone mill, ultrasonic dispersion system, homogenizer, planetary mixer, or the like. For example, the mixing may be carried out at a temperature ranging from room temperature to 80°C for 10 minutes to several hours.

Next, the slurry is spray dried. The spray drying method includes spraying and drying the slurry in hot air. Typical examples of the systems used for a spray drying process include atomizers. The atomizers may be classified into those for a rotary disc process and those for a pressurization process. The rotary disc process includes introducing the slurry substantially to the center of a disc rotating at a high speed, allowing the slurry to be located outside of the disc by the centrifugal force of the disc, and drying the slurry at that time in a fog-like phase. The disc rotation speed depends on the size of the disc, but generally may be 5,000-35,000 rpm, preferably 15,000-30,000 rpm. Meanwhile, the pressurization process includes pressurizing the slurry and drying the slurry in a fog-like phase from a nozzle.

The temperature of the sprayed slurry is generally room temperature, but may be warmed to a temperature higher than room temperature. The hot air temperature during spray drying may be controlled to 80-250°C, preferably 100-250°C, based on the reactor inlet temperature (upon the introduction) in terms of formation of a granule structure having a high content of binder on the surface. According to an embodiment of the present disclosure, the hot air temperature may be controlled preferably to 175-220°C, more preferably 180-220°C, considering the gradient of binder content and aspect ratio. **In** the spray drying method, the method for hot air suction is not particularly limited. For example, the hot air suction method may include a method using hot air flowing in parallel with the direction of spraying in the horizontal direction, a method of spraying slurry near the top of a drying tower and allowing the sprayed slurry to drop together with hot air, a method of allowing the sprayed drops to be in contact with hot air in a counter-current mode, a method of allowing the sprayed drops to flow in parallel with initial hot air first, and then to drop by gravity so that they may be contact with hot air in a counter-current mode, or the like. Meanwhile, according to an embodiment of the present disclosure, the outlet temperature (temperature of hot air discharged from the reactor) of the reactor in the spray drying process may be controlled to 90-130°C.

When the outlet temperature or the difference, $\Delta T$, between the inlet temperature and the outlet temperature is low, it is not possible to carry out drying sufficiently, and thus particles containing a large amount of residual solvent are formed, spherical particles having a uniform shape cannot be formed, and the granules may be agglomerated or may be formed into an amorphous state. Meanwhile, when the inlet temperature is excessively high and $\Delta T$ is large, over-drying occurs and granulation cannot be accomplished, and particles having an excessively small particle diameter ($D_{50}$) and a low aspect ratio may be formed. Therefore, in order to realize a high aspect ratio, to inhibit agglomeration of the binder and to control the particle size to a suitable level, it is required to control the inlet temperature and the outlet temperature to a suitable range.

In addition, the product, i.e. granule, obtained from the spray drying, may be optionally heat treated in order to cure the surface thereof, wherein the heat treatment temperature may be generally 80-300°C.

According to an embodiment of the present disclosure, the current collector is not particularly limited, as long as it has high conductivity, while not causing any chemical change in the corresponding battery. Particular examples of the current collector include stainless steel, aluminum, nickel, titanium, baked carbon, copper or stainless steel surface-treated with carbon, nickel, titanium, silver, or the like. In addition, fine surface irregularities may be formed on the surface of the current collector to enhance the binding force with the electrode active material. The current collector may be used in various shapes, including a film, sheet, foil, net, porous body, foamed body, non-woven web, or the like. Meanwhile, according to an embodiment of the present disclosure, the current collector may have a thickness of 10-50 $\mu$m, but is not limited thereto. For example, the current collector may have a thickness of 10-20 $\mu$m.

According to an embodiment of the present disclosure, the current collector may have a primer layer on at least one surface thereof, and the surface may be totally or partially coated with the primer layer. The primer layer may be introduced to improve the binding force between the current collector and the electrode active material layer and electrical conductivity. The primer layer may include a binder and a conductive material. Reference will be made to the above description of the binder and the conductive material of the electrode active material layer about the binder and the conductive material of the primer layer.

According to an embodiment of the present disclosure, besides the binder and the conductive material, the primer layer may further include a dispersing agent for dispersing such ingredients.

According to an embodiment of the present disclosure, the primer layer including the above-mentioned ingredients may have a thickness of 300 nm to 1.5 $\mu$m, particularly 700 nm to 1.3 $\mu$m, but is not limited thereto.

The electrode active material layer of the electrode according to an embodiment of the present disclosure may realize a higher ion diffusion rate as compared to a single electrode active material layer and/or multiple electrode active material layers including an interlayer interface having a horizontal linear shape, or other shapes, such as a triangular or trapezoidal shape. Otherwise, when the electrode active material layer according to an embodiment of the present disclosure shows a similar ion diffusion rate, it can provide an improved electrode capacity per volume.

In another aspect of the present disclosure, there is provided a method for manufacturing an electrode.

The method for manufacturing an electrode according to an embodiment of the present disclosure includes a process of forming an electrode active material layer on at least one surface of a current collector.

According to another embodiment of the present disclosure, the process of forming an electrode active material layer includes the steps of:

(S1) applying a plurality of first granules onto at least one surface of the current collector;
(S2) a first pressurization step of pressurizing the surface of the applied first granules by using a pressurizing roll having a pattern to form a pattern on the surface of the first granules;
(S3) applying a plurality of second granules onto the surface of the pressurized first granules; and
(S4) a second pressurization step of pressurizing the surface of the applied second granules.

The first granules include a first electrode active material and a first binder for binding the first electrode active material, and the second granules include a second electrode active material and a second binder for binding the second electrode active material.

According to an embodiment of the present disclosure, the first granules and the second granules may satisfy at least one of the following characteristics:

1) a first characteristic that the particle size of the first granules and that of the second granules are different from each other; and
2) a second characteristic that the composition of the first granules and that of the second granules are different from each other.

The process of forming an electrode active material layer is intended to form an electrode active material layer including the above-described upper layer zone, lower layer zone and an intermediate layer zone disposed between the lower layer zone and the upper layer zone. Herein, the intermediate layer zone has an interface having a cross-section with a continuous quadrangular shape formed by alternating the first unit zone including the first granules and the second unit zone including the second granules n times.

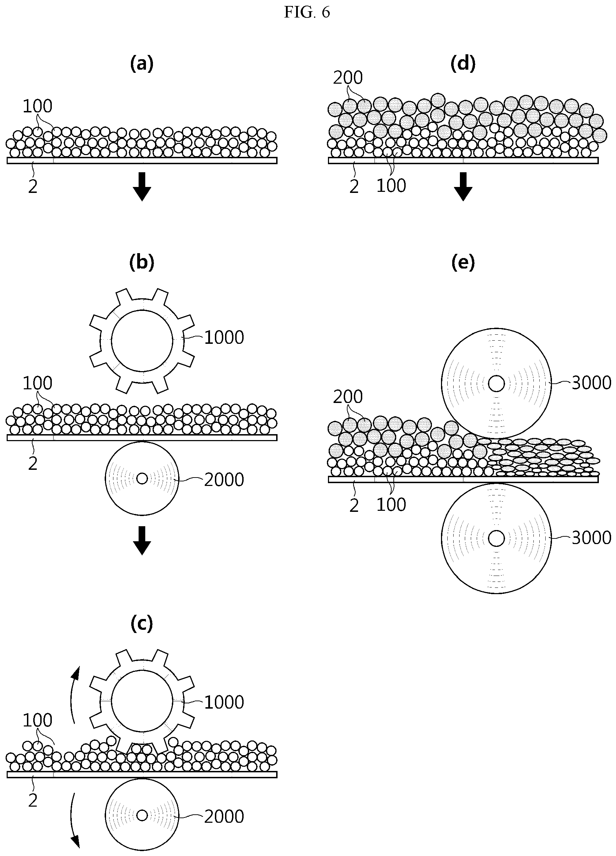

FIG. 6 is a flow chart illustrating the method for manufacturing an electrode according to an embodiment of the present disclosure.

Referring to FIG. 6, the method for manufacturing an electrode according to an embodiment of the present disclosure includes the steps of: (a) applying a plurality of first granules 100 onto a current collector 2; (c) pressurizing the surface of the applied first granules (b) by using a pressurizing roll 1000 having a pattern; (d) applying a plurality of second granules 200 onto the surface of the pressurized first granules; and (e) pressurizing the surface of the applied second granules.

Particularly, after applying a plurality of first granules 100 onto at least one surface of the current collector 2, the surface of the applied first granules is pressurized by using a pressurizing roll 1000 having a pattern to form a pattern on the surface of the first granules. Herein, the pattern functions as a pre-pattern of the interface of the intermediate layer zone of the resultant electrode active material layer.

In the conventional method for manufacturing a multilayer electrode by applying an electrode active material onto a current collector, carrying out pressurization, and further applying an electrode active material and carrying out pressurization, a pressurizing roll having a smooth surface is used to make the interlayer interface flat.

According to the present disclosure, a roll having a pattern formed thereon is used as a pressurizing roll in order to increase the surface area of the interface between the electrode active material layers.

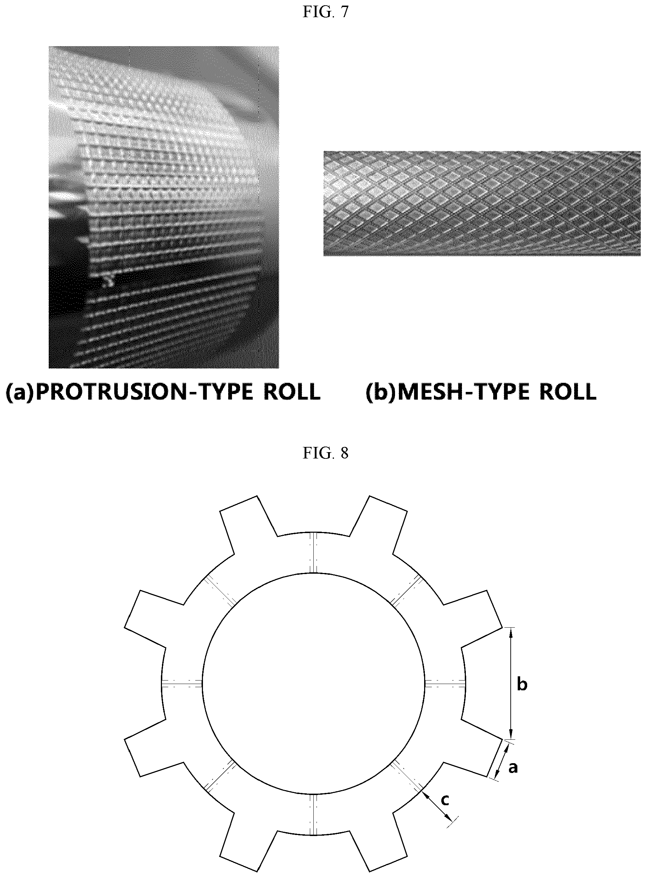

FIG. 7 is a photographic image illustrating the surface of a pressurizing roll having a pattern, which may be used in step (S2), according to an embodiment of the present disclosure.

Referring to FIG. 7, according to an embodiment of the present disclosure, the pattern of the pressurizing roll may be a protrusion type pattern (a) protruding outwardly from a central rod. Particularly, a roll having a quadrangular shaped protrusion pattern may be used so that each of the first unit zone and the second unit zone may have a quadrangular shaped cross-section.

Referring to FIG. 7, according to another embodiment of the present disclosure, the pattern of the pressurizing roll may be a mesh type pattern (b) indented inwardly from a central rod.

According to an embodiment of the present disclosure, the patten of the pressurizing roll may include a plurality of quadrangular shaped protrusions.

FIG. 8 shows the shape of the cross-section of a pressurizing roll including protrusions (protruding portions) having a predetermined width of protrusion and parallel with the longitudinal direction of a cylindrical pressing roll, according to an embodiment of the present disclosure. Referring to FIG. 8, a pressurizing roll having protrusions parallel with the longitudinal direction of the cylindrical pressurizing roll may be used to form a concave-convex pattern in the longitudinal direction (or machine direction, MD) of the electrode.

According to another embodiment of the present disclosure, a pressurizing roll including protrusions (protruding portions) perpendicular to the longitudinal direction of the cylindrical pressurizing roll and parallel with the cylindrical top surface and bottom surface may be used to form a concave-convex pattern in the electrode (not shown). In this case, the concave-convex pattern may be formed in the width direction (or transverse direction, TD) of the electrode.

Referring to FIG. 8, the quadrangular shaped protrusion may satisfy the following conditions of W3, W4 and T3:

$$d2 \leq T3$$

$$50\, d2 \leq W3 \leq 1{,}000\, d2,$$

$$50\, d1 \leq W4 \leq 1{,}000\, d1,$$

W3 is the width of the protruding portion of the protrusion, W4 is the shortest linear distance between two protrusions, T3 is the thickness of the protruding portion of the protrusion, d1 is the average particle diameter ($D_{50}$) of the first granules, and d2 is the average particle diameter ($D_{50}$) of the second granules.

According to an embodiment of the present disclosure, the quadrangular shaped pre-pattern of the intermediate layer zone of the electrode active material layer is formed on the surface of the first granules pressurized by the protrusion type pressurizing roll. When the second granules are applied to the surface of the first granules having the pre-pattern formed thereon, the second granules are coated on the surface of the first granules pressurized by the protrusions of the pressurizing roll, thereby forming a second unit zone in the intermediate layer zone of the electrode active material layer.

It is possible to obtain an electrode provided with an electrode active material layer having the above-mentioned lower layer zone, intermediate layer zone and upper layer zone by applying the second granules to the surface of the first granules having the pre-pattern formed as described above, followed by pressurization.

Herein, in the pressurization step of (S4), a pair of pressing rolls having a flat surface as shown in (e) of FIG. 6 may be used.

According to another embodiment of the present disclosure, after applying the second granules, the pressurizing roll having a pattern and used in the pressurization of step (S2) is used again to carry out pressurization, and then the third granules may be applied. In this manner, it is possible to obtain an electrode active material layer including two or more intermediate layer zones in the electrode active material layer.

In addition, the temperature and pressure conditions of each of the processes of granule application and pressurization in each step of (S1) to (S4) are not particularly limited, and any conventional conditions may be used.

In still another aspect of the present disclosure, there is provided an electrode assembly including a positive electrode, a negative electrode and a separator interposed between the positive electrode and the negative electrode.

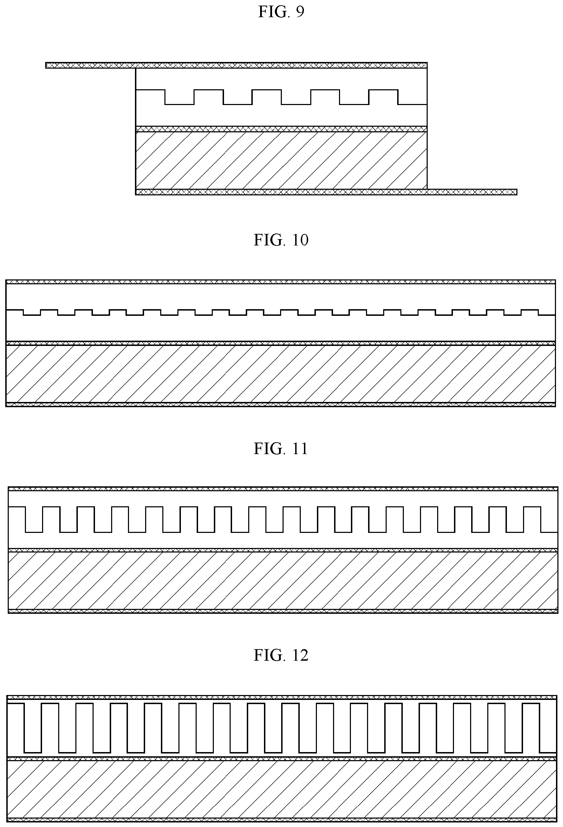

FIG. 9 is a schematic view illustrating the electrode assembly according to an embodiment of the present disclosure.

Referring to FIG. 9, the electrode assembly may include a positive electrode and a negative electrode on each of both surfaces of a separator with respect to the separator interposed between both electrodes, wherein each of the positive electrode and the negative electrode may include an active material layer formed on a current collector, and the current collector may include a non-coated portion (or tab) having no active material layer.

According to an embodiment of the present disclosure, at least one of the positive electrode and the negative electrode may be an electrode including no current collector (not shown).

According to the present disclosure, at least one of the positive electrode and the negative electrode may be the above-described electrode including the upper layer zone, lower layer zone and the intermediate layer zone.

According to an embodiment of the present disclosure, referring to FIG. 9, the electrode disposed on the top surface of the separator may be a negative electrode and the electrode disposed on the bottom surface of the separator may be a positive electrode. Contrary to this, the electrode disposed on the top surface of the separator may be a positive electrode and the electrode disposed on the bottom surface of the separator may be a negative electrode, and the scope of the present disclosure is not limited thereto.

In FIGS. 10-12, a schematic view illustrating an electrode assembly including the electrode according to an embodiment of the present disclosure is shown, wherein at least one of the positive electrode and the negative electrode of the electrode assembly includes the upper layer zone, the lower layer zone and the intermediate layer zone.

In yet another aspect of the present disclosure, there is provided an electrochemical device including a positive electrode, a negative electrode, a separator interposed between the positive electrode and the negative electrode and an electrolyte, wherein at least one of the positive electrode and the negative electrode is the above-described electrode.

According to an embodiment of the present disclosure, the separator and the electrolyte are not particularly limited, as long as they may be used for a conventional electrochemical device without detracting from the objects of the present disclosure. Therefore, detailed description of the separator and the electrolyte will be omitted herein.

According to an embodiment of the present disclosure, the outer shape of the electrochemical device may be selected from a coin-like shape, a cylindrical shape, a pouch-like shape or a prismatic shape with no particular limitation. In addition, the electrochemical device may be used not only for a battery cell used as a power source of a compact device but also for a unit cell in a middle- or large-scale battery module including a plurality of battery cells, and the application thereof is not particularly limited.

Examples, Comparative Examples and Test Examples will be described more fully hereinafter so that the present disclosure can be understood with ease. However, the following examples are for illustrative purposes only in describing the constitution and effects of the present disclosure, and the scope of the present disclosure is not limited thereto.

**Test Example 1. Evaluation of Charging Rate Depending on Height of Interfacial Shape**

[Manufacture of Electrode]

Preparation of First Granules (Lower Layer Zone)

First, 95.6 wt% of artificial graphite ($D_{50}$ 15 $\mu$m) as an electrode active material, 1.0 wt% of carbon black (Super C65) as an electrode conductive material, 1.1 wt% of carboxymethyl cellulose (daicel 2200, aqueous solution form, solid content 1.5 wt%) as an electrode dispersing agent, and 2.3 wt% of modified styrene butadiene copolymer (grade Name AX-B119) as an electrode binder were mixed with water as a dispersion medium through a homogenizer to prepare a slurry having a viscosity of about 1000 cPs. Herein, the slurry had a solid content of 30 wt%. The weight ratio of carboxymethyl cellulose was calculated based on the solid content.

The resultant slurry was introduced into a spray dryer with hot air and dried under a pressure condition of -40 mmH$_2$O. Herein, the spray dryer was controlled to an inlet temperature of 250°C, an outlet temperature of 100°C and a rotation speed of 18,000 rpm. Macropowder having a size of 150 $\mu$m was removed from the resultant granules by using an industrial sieve. The granules were provided with a core portion including a plurality of the electrode active materials and the electrode conductive material, and a surface portion disposed outside of the core portion and including the electrode binder for binding the electrode active materials and the electrode conductive material. The resultant first granules had an average particle diameter ($D_{50}$) of 50.1 $\mu$m and an aspect ratio of 1.04.

Preparation of Second Granules (Upper Layer Zone)

The second granules were prepared in the same manner as the first granules, except that an artificial graphite mixture ($D_{50}$ 15 $\mu$m): SiO ($D_{50}$ 6 $\mu$m) (weight ratio 9:1) was used as an electrode active material. The resultant second granules had an average particle diameter ($D_{50}$) of 48.28 $\mu$m and an aspect ratio of 1.01.

Manufacture of Electrode

An electrode was obtained according to the order as shown in FIG. 6 as follows.

The first granules prepared as described above were applied uniformly to one surface of a copper current collector (thickness 10 $\mu$m) by using a thickness-controlling bar in an amount of 200 mg per 25 cm$^2$ of the current collector, pressurization was carried out by using a pressing machine under a pressure of 0.1 ton/cm and a temperature of 60°C at a rate of 2 m/min, the second granules prepared as described above were applied uniformly to the pressurized surface in an amount of 200 mg per 25 cm$^2$ of the current collector, and a pressing machine provided with a roll having a smooth surface was used to carry out pressurization under a pressure of 0.5 ton/cm and a temperature of 60°C at a rate of 2 m/min. In this manner, an electrode was obtained.

The pressurizing roll used herein is shown in FIG. 8 in the form of a sectional schematic view. In the pressurizing roll, the protrusions appearing on the cross-section have the same width and are formed in parallel with the longitudinal direction of the cylindrical roll. Three electrodes were obtained with a different interfacial shape of the intermediate layer zone by varying the thickness of the protrusions while retaining the same width of the protrusions. The three electrodes are schematically shown in FIG. 10 (Example 1), FIG. 11 (Example 2) and FIG. 12 (Example 3).

The electrodes as shown in FIGS. 10-12 were formed in such a manner that each electrode might have a total length of 509.5 mm and a width of 93.3 mm and the first unit zone and the second unit zone might alternate 30 times, wherein the thickness T1, T2 of the first unit zone and the second unit zone was 3 $\mu$m (FIG. 10, Example 1), 27 $\mu$m (FIG. 11, Example 2) and 54 $\mu$m (FIG. 12, Example 3).

For the comparison with an electrode having a linear interfacial shape between the lower layer zone and the upper layer zone, an electrode pressed by using a conventional flat pressurizing roll with no protrusions was prepared as Comparative Example 1. An electrode was obtained in the same manner as described above, except that the pressurizing roll had such a different shape.

[Evaluation of Physical Properties]

The electrode (negative electrode) obtained as described above was allowed to face with a reference positive electrode with a polyethylene porous membrane interposed therebetween. The resultant structure was pressurized, dipped in an electrolyte and charged at a rate of 0.5 C and 1 C, and then the time required to reach a state of SOC 100% was measured. The results are shown in the following Table 1.

In addition, to comparatively evaluate the resistance of each electrode, electric current was applied at 2.5 C for 30 seconds, and the resistance value was calculated according to the formula of V = IR. The results are also shown in Table 1.

[Table 1]

| | number of n | Thickness T1, T2 ($\mu$m) | 0.5 C charging time (s) | 1 C charging time (s) | 2.5 C 30s pulse resistance ($\Omega$) |
|---|---|---|---|---|---|
| Comp. Ex. 1 | 0 | 0 | 5500 | - | 3.910 |
| Ex. 1 | 30 | 3 | 5650 | 2000 | 3.801 |
| Ex. 2 | 30 | 27 | 5718 | 2000 | 3.800 |
| Ex. 3 | 30 | 54 | 5740 | 2120 | 3.800 |

It can be seen from the results of Table 1 that the charge capacity is improved in the order of Example 3 > Example 2 > Example 1. This suggests that when the granules showing a kinetic favorable to the improvement of battery capacity are disposed in the upper layer zone, lithium conduction is facilitated through the interface of the intermediate layer zone, and thus the final charge capacity of the battery is improved while not increasing the resistance.

Particularly, it is shown that when the intermediate layer zone has a flat interface, the battery shows a poor charge capacity and an increased resistance value.

### Test Example 2. Evaluation of Charging Rate Depending on Width (Alternation Number n) of Unit Zones

An electrode was prepared by varying the width W1, W2 of the first unit zone and the second unit zone and varying the alternation number n of the first unit zone and the second unit zone, while retaining the length of the electrode. Then, charging was carried out in the same manner as Example 1 at a rate of 0.5 C, 1 C and 2 C, and the time required to reach a state of SOC 100% was measured. The results are shown in the following Table 2.

In addition, to comparatively evaluate the resistance of each electrode, electric current was applied at 2.5 C for 30 seconds, and the resistance value was calculated according to the formula of V = IR. The results are also shown in Table 2.

[Table 2]

| | num ber of n | Thickness T1, T2 ($\mu$m) | Charging time (s) | | | 2.5 C 30s pulse resistance ($\Omega$) |
|---|---|---|---|---|---|---|
| | | | 0.5 C | 1 C | 2 C | |
| Ex. 4 | 4 | 54 | 5605 | 2040 | 480 | 3.801 |
| Ex. 5 | 8 | 54 | 5730 | 2070 | 490 | 3.800 |
| Ex. 6 | 12 | 54 | 5771 | 2070 | 490 | 3.800 |
| Ex. 7 | 16 | 54 | 5796 | 2090 | 490 | 3.801 |
| Ex. 8 | 20 | 54 | 5797 | 2090 | 500 | 3.800 |
| Ex. 9 | 32 | 54 | 5783 | 2080 | 490 | 3.800 |

It can be seen from the results of Table 2 that when n is 20 and charging is carried out at 0.5 C to 2 C, the highest charging time is accomplished to provide the highest final charge capacity of the electrode. Particularly, the resistance value is not significantly changed when varying n, which suggests that the electrode according to the present disclosure can provide improved electrode capacity while not increasing the resistance value.

[Description of Numerals]

1: Electrode active material layer
2: Current collector
10: Lower layer zone
20: Upper layer zone
30: Intermediate layer zone
100: First granules
200: Second granules
301, 301': First unit zone

302, 302': Second unit zone
310: Interface
1000: Pressurizing roll having pattern
2000, 3000: Pressing roll

**Claims**

1. An electrode comprising:

   a current collector; and
   an electrode active material layer disposed on at least one surface of the current collector,
   wherein the electrode active material layer comprises:

   a lower layer zone adjacent to the current collector and comprising a plurality of first granules;
   an upper layer zone disposed on the lower layer zone and comprising a plurality of second granules; and
   an intermediate layer zone which is disposed between the lower layer zone and the upper layer zone and in which a first unit zone comprising the first granules and a second unit zone comprising the second granules are disposed alternately n times (wherein n is an integer of 2 or more) along the longitudinal direction of the electrode active material layer,
   each of the first unit zone and the second unit zone has a quadrangular shaped cross-section,
   the first granules comprise a first electrode active material and a first binder for binding the first electrode active material, and
   the second granules comprise a second electrode active material and a second binder for binding the second electrode active material.

2. The electrode according to claim 1, wherein the first granules and the second granules satisfy at least one of the following characteristics:

   1) a first characteristic that the particle size of the first granules and that of the second granules are different from each other; and
   2) a second characteristic that the composition of the first granules and that of the second granules are different from each other.

3. The electrode according to claim 1, wherein the cross-sectional shape of each of the first unit zone and the second unit zone of the intermediate layer zone satisfies the following conditions of T1, T2, W1 and W2:

$$d1 \leq T1,$$

$$d2 \leq T2,$$

$$50\ d1 \leq W1 \leq 1{,}000\ d1,$$

$$50\ d2 \leq W2 \leq 1{,}000\ d2,$$

   T1 is the thickness of the first unit zone,
   T2 is the thickness of the second unit zone,
   W1 is the width of the first unit zone,
   W2 is the width of the second unit zone,
   d1 is the average particle diameter ($D_{50}$) of the first granules, and
   d2 is the average particle diameter ($D_{50}$) of the second granules.

4. The electrode according to claim 3, wherein the cross-sectional shape of each of the first unit zone and the second unit zone of the intermediate layer zone satisfies the following conditions of T1, T2, W1 and W2:

$$d1 \leq T1 \leq 2\,d1,$$

$$d2 \leq T2 \leq 2\,d1,$$

$$100\,d1 \leq W1 \leq 600\,d1,$$

$$100\,d2 \leq W2 \leq 600\,d2.$$

5. The electrode according to claim 1, wherein when the average particle diameter ($D_{50}$) of the first granules is d1 and the average particle diameter ($D_{50}$) of the second granules is d2, $d2 \geq d1$.

6. The electrode according to claim 1, wherein when the average particle diameter ($D_{50}$) of the first granules is d1 and the average particle diameter ($D_{50}$) of the second granules is d2, $15\ \mu m \leq d1 \leq 150\ \mu m$, and $15\ \mu m \leq d2 \leq 150\ \mu m$.

7. The electrode according to claim 1, wherein the electrode active material comprises a negative electrode active material.

8. The electrode according to claim 1, wherein the electrode active material comprises a positive electrode active material.

9. The electrode according to claim 1, wherein at least one of the first electrode active material and the second electrode active material comprises a carbonaceous compound, and at least one of the first electrode active material and the second electrode active material comprises a silicon-based oxide.

10. The electrode according to claim 1, wherein the second electrode active material comprises $SiO_x$ ($0 \leq x \leq 2$).

11. The electrode according to claim 1, wherein the content of the first granules is 95 wt% or more based on the total weight of the granules contained in the lower layer zone, and the content of the second granules is 95 wt% or more based on the total weight of the granules contained in the upper layer zone.

12. The electrode according to claim 1, wherein n is an integer of 15-25.

13. The electrode according to claim 1, wherein the intermediate layer zone shows an ion diffusion rate higher than the ion diffusion rate of the upper layer zone.

14. The electrode according to claim 1, wherein the upper layer zone has an electrode capacity per volume higher than the electrode capacity per volume of the lower layer zone.

15. A method for manufacturing an electrode comprising a process of forming an electrode active material layer on at least one surface of a current collector, wherein the process of forming an electrode active material layer comprises the steps of:

applying a plurality of first granules onto at least one surface of the current collector;
a first pressurization step of pressurizing the surface of the applied first granules by using a pressurizing roll having a pattern to form a pattern on the surface of the first granules;
applying a plurality of second granules onto the surface of the pressurized first granules; and
a second pressurization step of pressurizing the surface of the applied second granules,
the first granules comprise a first electrode active material and a first binder for binding the first electrode active material, and
the second granules comprise a second electrode active material and a second binder for binding the second electrode active material.

16. The method for manufacturing an electrode according to claim 15, wherein the first granules and the second granules satisfy at least one of the following characteristics:

1) a first characteristic that the particle size of the first granules and that of the second granules are different from each other; and

2) a second characteristic that the composition of the first granules and that of the second granules are different from each other.

**17.** The method for manufacturing an electrode according to claim 15, wherein the pressurization roll has a protrusion-type pattern or a mesh-type pattern.

**18.** The method for manufacturing an electrode according to claim 15, wherein the pattern of the pressurizing roll comprises a plurality of quadrangular protrusions, and the shape of the protrusion satisfies the following conditions of W3, W4 and T3:

$$d2 \leq T3$$

$$50\ d2 \leq W3 \leq 1{,}000\ d2,$$

$$50\ d1 \leq W4 \leq 1{,}000\ d1,$$

W3 is the width of the protruding portion of the protrusion,

W4 is the shortest linear distance between two protrusions,

T3 is the thickness of the protruding portion of the protrusion,

d1 is the average particle diameter ($D_{50}$) of the first granules, and

d2 is the average particle diameter ($D_{50}$) of the second granules.

**19.** The method for manufacturing an electrode according to claim 15, wherein the electrode active material layer comprise:

a lower layer zone adjacent to the current collector and comprising a plurality of first granules;

an upper layer zone disposed on the lower layer zone and comprising a plurality of second granules; and

an intermediate layer zone which is disposed between the lower layer zone and the upper layer zone and in which a first unit zone comprising the first granules and a second unit zone comprising the second granules are disposed alternately n times along the longitudinal direction of the electrode active material layer, wherein n is an integer of 2 or more, and

each of the first unit zone and the second unit zone has a quadrangular shaped cross-section.

**20.** An electrochemical device comprising a positive electrode, a negative electrode, a separator interposed between the positive electrode and the negative electrode, and an electrolyte, wherein at least one of the positive electrode and the negative electrode is the electrode as defined in any one of claims 1 to 14.

FIG. 1

FIG. 2

FIG. 3

FIG. 4

FIG. 5

FIG. 6

FIG. 7

(a)PROTRUSION-TYPE ROLL     (b)MESH-TYPE ROLL

FIG. 8

FIG. 9

FIG. 10

FIG. 11

FIG. 12

## INTERNATIONAL SEARCH REPORT

| International application No. |
|---|
| **PCT/KR2023/011268** |

**A. CLASSIFICATION OF SUBJECT MATTER**

**H01M 4/13**(2010.01)i; **H01M 4/04**(2006.01)i; **H01M 4/139**(2010.01)i; **H01M 4/62**(2006.01)i; **H01M 4/66**(2006.01)i; **H01M 10/0525**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/13(2010.01); H01M 10/0525(2010.01); H01M 10/647(2014.01); H01M 4/139(2010.01); H01M 4/36(2006.01); H01M 50/20(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전기화학소자(electrochemical device), 전극(electrode), 집전체(current collector), 전극 활물질(electrode active material), 그래뉼(granule), 패턴(pattern), 중간층(intermediate layer), 가압롤(pressing roll)

**C. DOCUMENTS CONSIDERED TO BE RELEVANT**

| Category* | Citation of document, with indication, where appropriate, of the relevant passages | Relevant to claim No. |
|---|---|---|
| Y | JP 6878831 B2 (TOYOTA MOTOR CORP.) 02 June 2021 (2021-06-02)<br>See claims 1-2; and paragraphs [0013] and [0039]-[0040]. | 1-20 |
| Y | KR 10-2017-0107921 A (LG CHEM, LTD.) 26 September 2017 (2017-09-26)<br>See claims 1 and 6; and paragraphs [0033], [0035]-[0038] and [0046]-[0047]. | 1-20 |
| Y | KR 10-2018-0107617 A (LG CHEM, LTD.) 02 October 2018 (2018-10-02)<br>See claim 3; paragraphs [0014], [0040]-[0042], [0046]-[0047], [0072]-[0073] and [0088]; and figures 2-3 and 9-10. | 1-20 |
| Y | KR 10-2241465 B1 (LG CHEM, LTD.) 16 April 2021 (2021-04-16)<br>See claims 1 and 3. | 9-10,14 |
| A | KR 10-2017-0129514 A (LG CHEM, LTD.) 27 November 2017 (2017-11-27)<br>See entire document. | 1-20 |

✓ Further documents are listed in the continuation of Box C.    ✓ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 November 2023** | **10 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/011268**

**C.     DOCUMENTS CONSIDERED TO BE RELEVANT**

| Category* | Citation of document, with indication, where appropriate, of the relevant passages | Relevant to claim No. |
|---|---|---|
| A | KR 10-1664244 B1 (LG CHEM, LTD.) 10 October 2016 (2016-10-10)<br>See entire document. | 1-20 |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| JP | 6878831 | B2 | 02 June 2021 | JP | 2018-073602 | A | 10 May 2018 |
| KR | 10-2017-0107921 | A | 26 September 2017 | CN | 108352502 | A | 31 July 2018 |
| | | | | CN | 108352502 | B | 24 September 2021 |
| | | | | EP | 3349274 | A1 | 18 July 2018 |
| | | | | EP | 3349274 | A4 | 19 September 2018 |
| | | | | EP | 3349274 | B1 | 18 September 2019 |
| | | | | JP | 2018-537839 | A | 20 December 2018 |
| | | | | JP | 7058838 | B2 | 25 April 2022 |
| | | | | KR | 10-1939327 | B1 | 16 January 2019 |
| | | | | US | 10797305 | B2 | 06 October 2020 |
| | | | | US | 2018-0337396 | A1 | 22 November 2018 |
| | | | | WO | 2017-160085 | A1 | 21 September 2017 |
| KR | 10-2018-0107617 | A | 02 October 2018 | KR | 10-2245123 | B1 | 28 April 2021 |
| KR | 10-2241465 | B1 | 16 April 2021 | CN | 110431694 | A | 08 November 2019 |
| | | | | EP | 3591749 | A1 | 08 January 2020 |
| | | | | EP | 3591749 | A4 | 17 June 2020 |
| | | | | EP | 4160732 | A1 | 05 April 2023 |
| | | | | JP | 2020-509541 | A | 26 March 2020 |
| | | | | JP | 7041801 | B2 | 25 March 2022 |
| | | | | KR | 10-2019-0064480 | A | 10 June 2019 |
| | | | | US | 11563205 | B2 | 24 January 2023 |
| | | | | US | 2021-0119200 | A1 | 22 April 2021 |
| | | | | US | 2023-0078818 | A1 | 16 March 2023 |
| KR | 10-2017-0129514 | A | 27 November 2017 | None | | | |
| KR | 10-1664244 | B1 | 10 October 2016 | KR | 10-2015-0051046 | A | 11 May 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220095678
- KR 1020220105751